# EUROPEAN PATENT APPLICATION

(11) **EP 2 249 023 A1**
(43) Date of publication of application: **10.11.2010**
(21) Application number: 09006191.2
(22) Date of filing: 06.05.2009
(51) Int. Cl.: F02M 53/02

(54) **Fuel rail heating system of a combustion engine and fuel injection system**

(71) Applicant: Continental Automotive GmbH, 30165 Hannover (DE)
(72) Inventor: Giorgetti, Edoardo, 57013 Rosignano Marittimo (LI) (IT); Marc, Daniel, 57125 Livorno (IT)

(57) **Abstract**

Fuel rail heating system (38) of a combustion engine (22) comprising a fuel rail (18) with a main tube (32), the main tube (32) having a longitudinal central axis (A), two axial ends (34a, 34b) and a fuel rail cavity (36) being designed to contain fuel, a pipe (40) being hydraulically arranged between the two axial ends (34, 34a, 34b) of the fuel rail (18) and having a pipe cavity (44), the pipe (40) and the fuel rail (18) forming a common pipe-fuel-rail-circuit (50) to enable a common fuel circulation in the cavities (36, 44), and a heating device (48). The heating device (48) is thermally coupled to the main tube (32) and/or the pipe (40) and is designed to heat the fuel in the pipe-fuel-rail-circuit (50).

## Description

### Description

Fuel rail heating system of a combustion engine and Fuel injection system

The invention relates to a fuel rail heating system of an internal combustion engine and a fuel injection system.

Internal combustion engines with fuel injection systems are in widespread use. The fuel injection system can be designed to supply fuel to the internal combustion engine.

In order to keep pressure fluctuations during the operation of the internal combustion engine at a very low level, internal combustion engines are supplied with a fuel accumulator to which fuel injectors are connected and which has a relatively large volume. Such a fuel accumulator is often referred to as a fuel rail. The fuel injection system includes the fuel rail and the fuel injector. Known fuel rails comprise a hollow body with recesses, wherein the fuel injectors are arranged.

WO 2006/130938 A1 discloses a fuel-heating assembly for an internal combustion engine, which comprises a fuel rail linked to a fuel entry which is connected to a fuel pressurization system, in the fuel rail a fuel outlet is present, which is in fluid communication with at least one injection valve, at least one heating element which is inserted in the fuel rail, and one heat transfer region in which the heating element is inserted.

The object of the invention is to create a fuel rail heating system which is simply to be manufactured and that enables a precise dosing of fuel.

A further object of the invention is to create a fuel injection system of a combustion engine.

The objects are achieved by the features of the independent claims. Advantageous embodiments of the invention are given in the sub-claims.

According to a first aspect the invention is distinguished by a fuel rail heating system of a combustion engine comprising a fuel rail with a main tube, the main tube having a longitudinal central axis, two axial ends and a fuel rail cavity being designed to contain fuel, a pipe being hydraulically arranged between the two axial ends of the fuel rail and having a pipe cavity, the pipe and the fuel rail forming a common pipe-fuel-rail-circuit to enable a common fuel circulation in the cavities, and a heating device. The heating device is thermally coupled to the main tube and/or the pipe and is designed to heat the fuel in the pipe-fuel-rail-circuit.

This has the advantage that a good heat transfer from the heating device to the fuel in the pipe cavity and the fuel rail cavity through the common pipe-fuel-rail-circuit is possible. In particular, a good movement of the fuel in the pipe-fuel-rail-circuit is possible. Consequently, a fast heating of the fuel in particular in the fuel rail is possible. This enables good cold start properties of the combustion engine in particular in view of fuels which comprise alcohols. Furthermore, only small variations in the construction compared to conventional fuel rails are necessary. Consequently, a low cost solution for the heating systems for fuel rails is possible.

In an advantageous embodiment a circulation pump is hydraulically arranged in the pipe-fuel-rail-circuit. The circulation pump is designed to enable a forced common fuel circulation in the pipe cavity and the fuel rail cavity. This has the advantage that a high heat transfer rate from the heating device to the fuel in the cavities is possible.

In a further advantageous embodiment the pipe has an outer surface and the heating device is arranged at the outer surface. This is a simple arrangement of the heating device at the pipes. In the case that the pipes are of a metal or comprise a metal a high heat transfer rate from the heating device to the fuel particular in the pipe cavity is possible. Furthermore, a large heat transfer surface between the heating device and the fuel is available.

In a further advantageous embodiment the heating device is arranged in at least one of the cavities. This has the advantage that a high heat transfer rate from the heating device directly to the fuel is possible.

According to a second aspect the invention is distinguished by a fuel injection system of a combustion engine comprising a fuel rail heating system according to the first aspect, a feed pump being designed to feed fuel out from a fuel tank, a high pressure pump being arranged hydraulically downstream the feed pump and being designed to pump fuel into a fuel rail of the fuel rail heating system, and at least one fuel injector being hydraulically coupled to the fuel rail. A booster pump is arranged hydraulically downstream the high pressure pump and hydraulically upstream the fuel rail. The booster pump is designed to obtain a desired fuel pressure in the fuel rail.

This has the advantage that a good fuel spray is available from the injector due to a high pressure and a high temperature of the fuel, in particular in view of fuels which comprise alcohols and during cold start conditions of the combustion engine.

Exemplary embodiments of the invention are explained in the following with the aid of schematic drawings. These are as follows:
Figure 1 an internal combustion engine with a fuel injection system in a schematic view,
Figure 2 a first embodiment of a fuel rail heating system of the internal combustion engine in a schematic view, and
Figure 3 a second embodiment of the fuel rail heating system in a schematic view.

Elements of the same design and function that occur in different illustrations are identified by the same reference character.

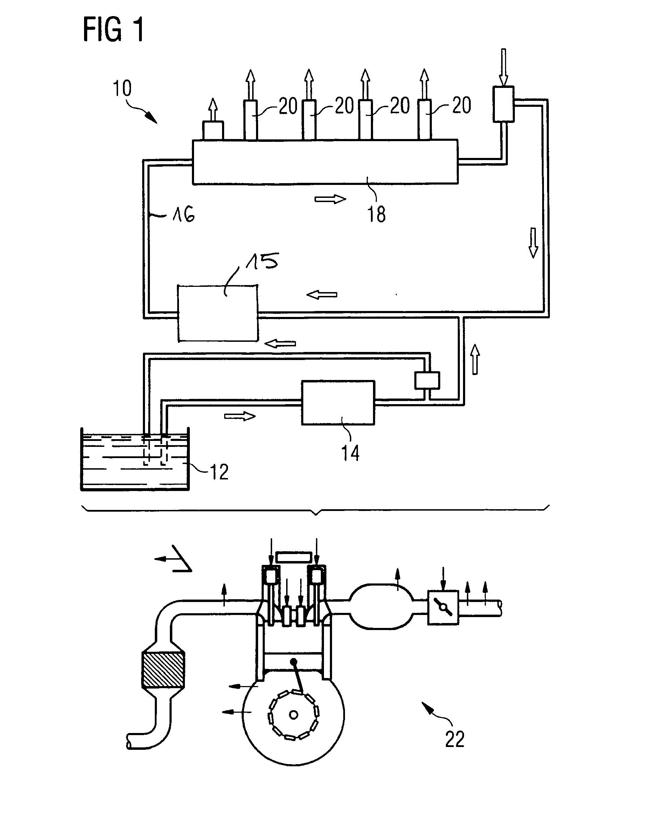

Figure 1 shows a fuel feed device 10 which is assigned to an internal combustion engine 22 of a vehicle. It includes a fuel tank 12 that is connected via a fuel line to a fuel feed pump 14. A high pressure pump 15 is arranged hydraulically downstream the output of the feed pump 14. The output of the high pressure pump 15 is hydraulically coupled to a fuel inlet 16 of a fuel rail 18.

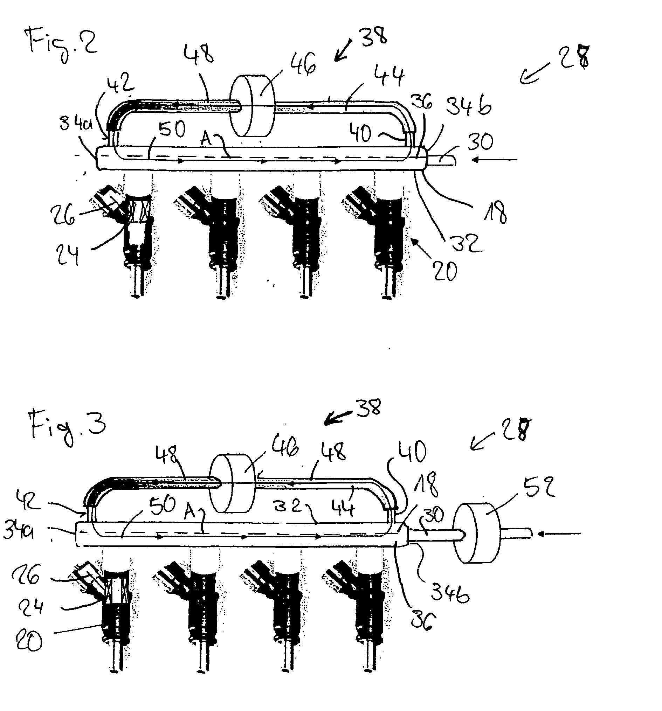

Fuel injectors 20 are coupled to the fuel rail 18. The fuel is fed to the fuel injectors 20 via the fuel rail 18. The fuel injectors 20 have a sealed connection to the fuel rail 18. The fuel injectors 20 are designed to be coupled to an electrical supply to actuate an actuator unit of the fuel injector 20. Preferably, the actuator unit comprises a coil 24 which is coupable to the electrical supply by pins 26 as can be seen in Figures 2 and 3.

Figures 2 and 3 show a fuel injection system 28 with the fuel rail 18 in detail.

The fuel rail 18 comprises an inlet portion 30 which is arranged at a main tube 32 of the fuel rail 18. The main tube 32 has a longitudinal central axis A and a first axial end 34a and a second axial end 34b.

The main tube 32 of the fuel rail 18 has a main tube cavity 36. The cross section of the main tube 32 can be of any shape, in particular of a circular or square shape. The main tube 32 is designed to contain fuel.

The fuel injection system 28 has a fuel rail heating system 38. The fuel rail heating system 38 comprises the fuel rail 18, a pipe 40 and a heating device 48.

The pipe 40 is hydraulically arranged between the two axial ends 34a, 34b of the fuel rail 18. The pipe 40 has an outer surface 42 and a pipe cavity 44. Preferably, the pipe 40 and/or the main tube 32 are of a material comprising a metal.

The pipe 40 and the fuel rail 18 are forming a common pipe-fuel-rail-circuit 50. The common pipe-fuel-rail-circuit 50 makes it possible that fuel can flow through the cavities 36, 44.

A circulation pump 46 is hydraulically arranged in the pipe-fuel-rail-circuit 50. The circulation pump 46 can pump fuel through the both cavities 36, 44. In the shown embodiments in Figures 2 and 3 the circulation pump 46 is hydraulically arranged in the pipe 40 thereby dividing the pipe 40 in two parts. In further embodiments, the circulation pump 46 can be arranged hydraulically between the pipe 40 and the fuel rail 18.

Preferably, the heating device 48 is arranged at the outer surface 42 of the pipe 40. Consequently, the heating device 48 is thermally coupled to the pipe 40. In further embodiments, the heating device 48 is arranged at an outer surface of the main tube 32. In particular, if the pipe 40 and/or the main tube 32 are of a material comprising a metal, it is possible that the heat can flow with a high heat transfer rate from the heating device 48 to the fuel in the pipe cavity 44 and/or the main tube cavity 36. Consequently, the heating device 48 can heat up the fuel in the pipe-fuel-rail-circuit 50.

In further embodiments, the heating device 48 is arranged inside at least one of the main tube cavity 36 and pipe cavity 44. This enables that the heat can be transferred directly from the heating device 48 to the fuel in the pipe cavity 44 and/or the main tube cavity 36.

Figure 3 shows a fuel injection system of a combustion engine 22 with a booster pump 52. The booster pump 52 is arranged hydraulically downstream the high pressure pump 15 and upstream the fuel rail 18. With the booster pump 52 a desired fuel pressure in the fuel rail 18 can be achieved. By this a good fuel spray is available from the fuel injector 20 due to a high pressure and a high temperature of the fuel. This is relevant in particular in view of fuels which comprise alcohols as ethanol in particular during the start period of the combustion engine 22.

In the following the function of the fuel rail heating system 38 will be described in detail:
The fuel comes from the inlet portion 30 and enters the fuel rail 18 at the second end 34b. Due to the hydraulic pump 46 the fuel is pumped through the pipe-fuel-rail-circuit 50 in a counterclockwise direction. Coming from the second end 34b of the fuel rail 18 the fuel enters the pipe 40. The heat of the heating device 48 being arranged at the outer surface 42 of the pipe 40 is transferred to the fuel in the pipe 40 and therefore, the fuel is heated up by the heating device 48. Due to the arrangement of the heating device 48 a fast heating of the fuel in the pipe 40 is possible. The heated fuel leaves the pipe 40 and enters the fuel rail 18 at the first end 34a. Depending on the fuel demand of the injectors 20 the heated fuel can leave the fuel rail 18 through the fuel injectors 20 or is again passing the pipe 40 of the pipe-fuel-rail-circuit 50.

In the embodiment of Figure 3 with the booster pump 52 being arranged hydraulically downstream the high pressure pump 15 and upstream the fuel rail 18 a very high pressure is available in the fuel rail 18. Therefore and due to the high temperature of the fuel in the fuel rail 18 the fuel can be atomized in a very good manner and a well-distributed fuel spray in the combustion chamber of the combustion engine 22 is available from the fuel injector 20.

Furthermore, if the fuel is heated up with the waste heat of the coil 24 of the injector 20 being coupled to the electrical supply, e.g. a battery, prior a cold start phase, the fuel being trapped inside the injector 20 can also be heated up very well.

Heating up the fuel with the described fuel rail heating system 38 comprises the described advantages in particular in view of fuels which include alcohols, e.g. ethanol, during cold start conditions of the combustion engine.

Although this invention is in particular described for fuel rails 18 made of metal it can be applied to fuel rails 18 made of plastics as well.

## Claims

1. Fuel rail heating system (38) of a combustion engine (22) comprising
- a fuel rail (18) with a main tube (32), the main tube (32) having a longitudinal central axis (A), two axial ends (34a, 34b) and a fuel rail cavity (36) being designed to contain fuel,
- a pipe (40) being hydraulically arranged between the two axial ends (34a, 34b) of the fuel rail (18) and having a pipe cavity (44), the pipe (40) and the fuel rail (18) forming a common pipe-fuel-rail-circuit (50) to enable a common fuel circulation in the cavities (36, 44), and
- a heating device (48) being thermally coupled to the main tube (32) and/or the pipe (40) and being designed to heat the fuel in the pipe-fuel-rail-circuit (50).

2. Fuel rail heating system (38) according to claim 1, wherein a circulation pump (46) is hydraulically arranged in the pipe-fuel-rail-circuit (50) and is designed to enable a forced common fuel circulation in the cavities (36, 44).

3. Fuel rail heating system (38) according to claim 1 or 2, wherein the pipe (40) has an outer surface (42) and the heating device (48) is arranged at the outer surface (42).

4. Fuel rail heating system (38) according to one of the preceding claims, wherein the heating device (48) is arranged in at least one of the cavities (36, 44).

5. Fuel injection system (28) of a combustion engine (22) comprising
- a fuel rail heating system (38) according to one of the preceding claims,
- a feed pump (14) being designed to feed fuel out from a fuel tank (12),
- a high pressure pump (15) being arranged hydraulically downstream the feed pump (14) and being designed to pump fuel into a fuel rail (18) of the fuel rail heating system (38), and
- at least one fuel injector (20) being hydraulically coupled to the fuel rail (18),
wherein a booster pump (52) is arranged hydraulically downstream the high pressure pump (15) and hydraulically upstream the fuel rail (18) and is designed to obtain a desired fuel pressure in the fuel rail (18).
